# EUROPÄISCHE PATENTSCHRIFT

(11) **EP 1 342 148 B1**
(45) Veröffentlichungstag und Bekanntmachung des Hinweises auf die Patenterteilung: **03.07.2013**
(21) Anmeldenummer: 01991797.0
(22) Anmeldetag: 06.12.2001
(51) Int. Cl.: G06F 9/38, G06F 1/00

(54) **KRYPTOGRAPHIEPROZESSOR**
CRYPTOGRAPHIC PROCESSOR
PROCESSEUR CRYPTOGRAPHIQUE

(30) Priorität: 13.12.2000 DE 10061997
(43) Veröffentlichungstag der Anmeldung: 10.09.2003
(60) Teilanmeldung: 05012165.6
(73) Patentinhaber: Infineon Technologies AG, 85579 Neubiberg (DE)
(72) Erfinder: ELBE, Astrid, 81243 München (DE); SEDLAK, Holger, 82054 Sauerlach (DE); JANSSEN, Norbert, 81667 München (DE)
(74) Vertreter: Zinkler, Franz
(86) Internationale Anmeldenummer: PCT/EP2001/014349
(87) Internationale Veröffentlichungsnummer: WO 2002/048845

(56) Entgegenhaltungen:
- FR-A- 2 787 900
- FR-A- 2 789 535
- KATO T ET AL: "A DESIGN FOR MODULAR EXPONENTIATION COPROCESSOR IN MOBILE TELECOMMUNICATION TERMINALS" CRYPTOGRAPHIC HARDWARE AND EMBEDDED SYSTEMS. 2ND INTERNATIONAL WORKSHOP, CHES 2000, WORCHESTER, MA, AUG. 17 - 18, 2000 PROCEEDINGS, LECTURE NOTES IN COMPUTER SCIENCE, BERLIN: SPRINGER, DE, Bd. 1965, 17. August 2000 (2000-08-17), Seiten 216-228, XP001049135 ISBN: 3-540-41455-X
- GROSSSCHAEDL J: "HIGH-SPEED RSA HARDWARE BASED ON BARRET'S MODULAR REDUCTION METHOD" CRYPTOGRAPHIC HARDWARE AND EMBEDDED SYSTEMS. 2ND INTERNATIONAL WORKSHOP, CHES 2000, WORCHESTER, MA, AUG. 17 - 18, 2000 PROCEEDINGS, LECTURE NOTES IN COMPUTER SCIENCE, BERLIN: SPRINGER, DE, Bd. 1965, 17. August 2000 (2000-08-17), Seiten 191-203, XP001049133 ISBN: 3-540-41455-X
- WALTER C D: "Improved linear systolic array for fast modular exponentiation" IEE PROCEEDINGS E. COMPUTERS & DIGITAL TECHNIQUES, INSTITUTION OF ELECTRICAL ENGINEERS. STEVENAGE, GB, Bd. 147, Nr. 5, 28. September 2000 (2000-09-28), Seiten 323-328, XP006013930 ISSN: 1350-2387
- NACCACHE, D.; M'RAIHI D.: "Arithmetic Co-processors for Public-key Cryptography: The State of the Art", PROC. OF CARDIS'96 , 18 September 1996 (1996-09-18), pages 39-58, AMSTERDAM Retrieved from the Internet: URL:http://www.gemplus.com/smart/r_d/publi cations/pdf/NM96arit.pdf

## Beschreibung

Die vorliegende Erfindung bezieht sich auf Kryptographietechniken und insbesondere auf die Architektur von für kryptographische Anwendungen verwendeten Kryptographieprozessoren.

Mit zunehmender Verbreitung von bargeldlosem Zahlungsverkehr, elektronischer Datenübertragung über öffentliche Netze, Austausch von Kreditkartennummern über öffentliche Netze und allgemein gesagt der Verwendung von sogenannten Smart Cards für Zahlungs-, Identifikations- oder Zugriffszwecke entsteht ein immer größerer Bedarf nach Kryptographietechniken. Kryptographietechniken umfassen einerseits Kryptographiealgorithmen und andererseits geeignete Prozessorenlösungen, welche die durch die Kryptographiealgorithmen vorgeschriebenen Berechnungen ausführen. Wurden früher Kryptographiealgorithmen mit Allzweckrechnern ausgeführt, so spielten die Kosten, der Rechenzeitbedarf und die Sicherheit gegenüber verschiedenartigsten Fremdattacken keine derart entscheidende Rolle wie heutzutage, wo kryptographische Algorithmen immer mehr auf Chipkarten oder speziellen Sicherheits-ICs ausgeführt werden, für die besondere Anforderungen gelten. So müssen solche Smart Cards einerseits preisgünstig verfügbar sein, da sie Massenprodukte sind, andererseits jedoch eine große Sicherheit gegenüber Fremdattacken aufweisen, da sie vollständig in der Gewalt des potentiellen Angreifers sind.

Darüber hinaus müssen kryptographische Prozessoren eine beachtliche Rechenleistung zur Verfügung stellen, zumal die Sicherheit von vielen kryptographischen Algorithmen, wie z. B. dem bekannten RSA-Algorithmus, entscheidend von der Länge der verwendeten Schlüssel abhängt. In anderen Worten ausgedrückt bedeutet dies, dass mit zunehmender Länge der zu verarbeitenden Zahlen auch die Sicherheit ansteigt, da ein Angriff, der auf dem Ausprobieren aller Möglichkeiten basiert, aus Rechenzeitgründen unmöglich gemacht wird.

In Zahlenwerten ausgedrückt bedeutet dies, dass Kryptographieprozessoren mit Integers, d. h. Ganzzahlen, umgehen müssen, welche eine Länge von vielleicht 1024 Bits, 2048 Bits oder vielleicht sogar noch mehr haben können. Zum Vergleich verarbeiten Prozessoren in einem üblichen PC 32-Bit- bzw. 64-Bit-Ganzzahlen.

Ein hoher Rechenaufwand bedeutet jedoch auch eine hohe Rechenzeit, so dass für Kryptographieprozessoren gleichzeitig auch die wesentliche Anforderung darin besteht, einen hohen Rechendurchsatz zu erreichen, damit beispielsweise eine Identifikation, ein Zugang zu einem Gebäude, eine Bezahlungstransaktion oder eine Kreditkartenübermittlung nicht viele Minuten dauert, was für die Marktakzeptanz sehr schädlich wäre.

Zusammenfassend lässt sich daher feststellen, dass Kryptographieprozessoren sicher, schnell und daher außerordentlich leistungsstark sein müssen.

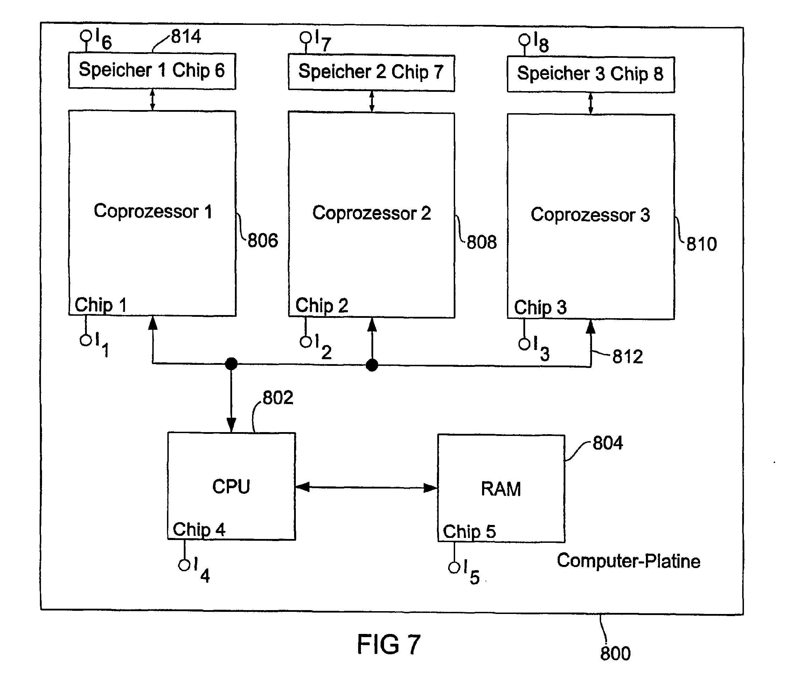

Eine Möglichkeit, um den Durchsatz durch einen Prozessor zu erhöhen, besteht darin, eine zentrale Verarbeitungseinheit mit einem oder mehreren Coprozessoren, welche parallel arbeiten, auszustatten, wie es beispielsweise bei modernen PCs oder aber auch bei modernen Graphikkarten der Fall ist. Ein solches Szenario ist in Fig. 7 gezeigt. Fig. 7 zeigt eine Computerplatine 800, auf der eine CPU 802, ein Arbeitsspeicher (RAM) 804, ein erster Coprozessor 806, ein zweiter Co-prozessor 808 sowie ein dritter Coprozessor 810 angeordnet sind. Die CPU 802 ist mit den drei Coprozessoren 806, 808, 810 über einen Bus 812 verbunden. Ferner kann für jeden Co-prozessor ein eigener Speicher vorgesehen sein, welcher nur für Operationen des Coprozessors dient, d. h. ein Speicher 1 814, ein Speicher 2 816 für den Coprozessor 2 sowie ein Speicher 3 818 für den Coprozessor 3.

Ferner wird jeder Chip, der auf der in Fig. 7 gezeigten Computerplatine 800 angeordnet ist, über einen eigenen Strom- bzw. Spannungsversorgungsanschluss I₁ bis I₈ mit der für das Funktionieren der elektronischen Komponenten innerhalb der einzelnen Elemente benötigten elektrischen Leistung versorgt. Für die Platine kann alternativ auch nur eine Stromversorgung vorhanden sein, die dann über die Platine zu den einzelnen Chips auf der Platine verteilt wird. Dabei stehen jedoch die Versorgungsleitungen zu den einzelnen Chips für einen Angreifer zur Verfügung.

Das in Fig. 7 gezeigte Konzept für übliche Computeranwendungen ist aus mehreren Gründen für Kryptographieprozessoren ungeeignet. Zum einen sind alle Elemente für die Kurzzahl-Arithmetik aufgeführt, während Kryptographieprozessoren Langzahlarithmetik-Operationen durchführen müssen.

Des weiteren weist jeder Chip auf der Computerplatine 800 einen eigenen Strom- bzw. Leistungszugang auf, auf den ohne weiteres von einem Angreifer zugegriffen werden kann, um Leistungsprofile oder Stromprofile über der Zeit abzugreifen. Das Abgreifen von Leistungsprofilen über der Zeit ist die Basis für eine Vielzahl von effizienten Attacken gegenüber Kryptographieprozessoren. Weitere Hintergründe bzw. eine detaillierte Darstellung verschiedener Attacken gegen Kryptographieprozessoren sind in "Information Leakage Attacks Against Smart Card Implementations of Cryptographic Algorithms and Countermeasures", Hess u. a., Eurosmart Security Conference, 13. Juni bis 15. Juni 2000, dargestellt. Als Gegenmaßnahmen werden Implementationen vorgeschlagen, welche darauf aufbauen, dass verschiedene Operationen immer die gleiche Zeit benötigen, so dass ein Angreifer aufgrund eines Leistungsprofils nicht ersehen kann, ob der Kryptoprozessor eine Multiplikation, eine Addition oder irgend etwas anderes ausgeführt hat.

In "Design of Long Integer Arithmetic units for Public-Key Algorithms", Hess u. a. Eurosmart Security Conference, 13. Juni bis 15. Juni 2000 wird auf verschiedene Rechenoperationen eingegangen, welche von Kryptographie-Prozessoren ausführbar sein müssen. Insbesondere wird auf die modulare Multiplikation, Verfahren zur modularen Reduktion sowie auf das sogenannten ZDN-Verfahren eingegangen, das in dem deutschen Patent DE 36 31 992 C2 dargestellt ist.

Das ZDN-Verfahren basiert auf einer Seriell/Parallel-Architektur unter Verwendung von parallel ausführbaren Look-Ahead Algorithmen für die Multiplikation und die modulare Reduktion, um eine Multiplikation zweier Binärzahlen in eine iterative 3-Operanden-Addition unter Verwendung von Look-Ahead-Parametern für die Multiplikation und die modulare Reduktion zu transformieren. Hierzu wird die modulare Multiplikation in eine serielle Berechnung von Partialprodukten zerlegt. Zu Beginn der Iteration werden zwei Partialprodukte gebildet und dann unter Berücksichtigung der modularen Reduktion zusammenaddiert, um ein Zwischenergebnis zu erhalten. Hierauf wird ein weiteres Partialprodukt gebildet und wieder unter Berücksichtigung der modularen Reduktion zu dem Zwischenergebnis hinzuaddiert. Diese Iteration wird fortgesetzt, bis sämtliche Stellen des Multiplikators abgearbeitet sind. Für die Drei-Operanden-Addition umfasst ein Kryptocoprozessor ein Addierwerk, welches in einem aktuellen Iterationsschritt die Summation eines neuen Partialprodukt zu dem Zwischenergebnis des vorausgehenden Iterationsschritts durchführt.

So könnte jeder Coprozessor von Fig. 7 mit einer eigenen ZDN-Einheit ausgestattet sein, um mehrere modulare Multiplikationen parallel auszuführen, um für bestimmte Anwendungen den Durchsatz zu erhöhen. Diese Lösung würde jedoch wiederum daran scheitern, dass ein Angreifer von jedem Chip einzeln die Stromprofile eruieren könnte, so dass zwar eine Erhöhung des Durchsatzes erreicht worden ist, jedoch auf Kosten der Sicherheit des Kryptographie-Rechners.

Die Fachveröffentlichung "A Design For Modular Exponentiation Coprocessor In Mobile Telecommunication Terminals", Kato T Et al., Cryptographic Hardware And Embedded Systems, 2ND International Workshop, 17. 18. August 2000, Proceedings, Lecture Notes In Computer Science, Seiten 215-228) zeigt einen Entwurf für einen Koprozessor zur Durchführung der modularen Exponentiation in Mobiltelekommunikationsterminals. Zur Durchführung der modularen Exponentiation wird der sogenannte Square-And-Multiply-Algorithmus eingesetzt. Es wird eine Links-Nach-Rechts-Schaltung (LRC) und eine Rechts-Nach-Links-Schaltung (RLC) untersucht. Insbesondere wird vorgeschlagen, eine Einheit zur modularen Quadrierung und eine Einheit zur modularen Multiplikation durch eine gemeinsame Steuereinheit anzusteuern. Darüber hinaus wird eine weitere modulare Mulitplikationsschaltung sowie eine weitere modulare Quadrierungsschaltung vorgesehen, die ebenfalls durch eine gemeinsame Steuerung verbunden sind. Alternativ wird vorgeschlagen, drei modulare Multiplikationseinheiten durch eine gemeinsame Steuerung anzusteuern. Die drei modularen Multiplikationseinheiten arbeiten parallel, wobei zwei Multiplikationseinheiten eine Rechts-Nach-Links-Berechnung ausführen, während die dritte Multiplikationseinheit eine Dummy-Berechnung ausführt. Alternativ führen zwei Multiplikationseinheiten eine Links-Nach-Rechts-Berechnung aus, während die dritte Multiplikationseinheit eine Dummy-Berechnung. ausführt. Wieder alternativ wird von zwei Multiplikationseinheiten ein spezieller Algorithmus ausgeführt, während die dritte Multiplikationseinheit eine Dummy-Berechnung ausführt.

Die Fachveröffentlichung "High-Speed RSA Hardware Based On Barret's Modular Reduction Method", J. Großschaedl, 2ND International Workshop, Ches 2000, Proceedings, Lecture Notes In Computer Science, Bd. 1965, 17. August 2000, Seiten 191-203, offenbart einen RSA-Kryptochip mit einer Schnittstellen/Steuereinheit, einem Multiplizierer-Kern und einem E/O-Register mit 1056 Bit. Der Multiplizierer-Kern ist ein Teil-Parallel-Multiplizierer mit diversen Registern, einem Die Fachveröffentlichung Arithmetic Co-processors for Public-key Cryptography: The State of the Art; David Naccache o.a., Proceedings of Cardis 96, 1996, 18. September 1996, Seite 39 bis 58°, offenbart arithmetische Co-Prozessoren. Ein arithmetischer Co-Prozessor ist eine spezielle Hardware zum Berechnen des geheimen Schlüssels und in manchen Fällen einer gesamten modularen Exponentiation. Die Co-Prozessoren können bestimmte mathematische Verfahren ausrechnen, wie beispielsweise das Verfahren gemäß Levy-dit-Vehel und Naccache. Hier berechnet ein Algorithmus eine Zahl mit einem dreifachen Seriel-Parallel-Multiplizierer, d.h. einem Hardware-Block, der gleichzeitig drei Multiplikationen ausführt. Eine Reduktion wird unter Verwendung des Algorithmus von Barrett durchgeführt.

Die Aufgabe der vorliegenden Erfindung besteht darin, einen schnellen und sicheren Kryptographieprozessor zu schaffen.

Diese Aufgabe wird durch einen Kryptographieprozessor nach Patentanspruch 1 gelöst.

Der vorliegenden Erfindung liegt die Erkenntnis zugrunde, dass ein schneller Kryptographieprozessor nur erreicht werden kann, wenn eine Kryptographie-Rechenoperation in mehrere Teiloperationen zerlegt wird, und diese Teiloperationen von parallel angeordneten Teilrechenwerken ausgeführt werden. Andererseits kann eine Sicherheit insbesondere gegen Leistungsabhörattaeken nur erreicht werden, wenn sämtliche Teilrechenwerke einschließlich der Steuereinheit für die Teilrechenwerke und der zentralen Verarbeitungseinheit auf einem einzigen Chip angeordnet werden, so dass die Leistungszugänge für die einzelnen Komponenten nicht für einen äußeren Angreifer zur Verfügung stehen.

Anders ausgedrückt sind die zentrale Verarbeitungseinrichtung und der Coprozessor, der eine einzige Steuereinheit sowie die Mehrzahl von Teilrechenwerken aufweist, auf einem einzigen Chip integriert. Darüber hinaus weist dieser einzige Chip lediglich einen einzigen Versorgungszugang zum Versorgen der Mehrzahl von Teilrechenwerken, der Steuereinheit und der zentralen Verarbeitungseinheit mit Strom auf.

Das Integrieren dieser Komponenten auf einem Chip und das Versorgen des Chips mit einem Versorgungsstromzugang hat den Vorteil, dass sich am Stromanschluss des Kryptographieprozessors die Stromprofile, die den Operationen der Teilrechenwerke zugeordnet sind, überlagern. Wenn beispielsweise zwei Teilrechenwerke parallel arbeiten, so überlagern sich die Stromprofile dieser beiden Teilrechenwerke, derart, dass es für den Angreifer schwierig wird, anhand des Leistungsversorgungsprofils zu erkennen, welche Operationen mit welchen Zahlen die beiden Teilrechenwerke gleichzeitig durchführen. Wird die Anzahl der Teilrechenwerke erhöht, so wird auch das Stromprofil an dem einzigen Versorgungsanschluss immer homogener. Durch zunehmende parallele Verarbeitung mit zunehmender Anzahl von parallelen Teilrechenwerken steigt jedoch auch der Durchsatz, so dass sich beim erfindungsgemäßen Konzept mit zunehmendem Durchsatz auch die Sicherheit erhöht. Im Stand der Technik war dies nicht der Fall, ganz im Gegenteil verringerte sich die Sicherheit mit zunehmendem Durchsatz.

Eine Grenze der parallelen Verarbeitung ist dann erreicht, wenn der Rechenaufwand in der Steuereinheit zum Verteilen der Teiloperationen auf die Teilrechenwerke und zum Ansteuern der einzelnen Teilrechenwerke stark zunimmt. Für relativ lang dauernde Operationen, wie z. B. die Multiplikation von zwei sehr langen Ganzzahlen, ist jedoch das Verhältnis von Rechenzeit in einem Teilrechenwerk zu der Rechenzeit der Steuereinheit für Organisations- und Verwaltungsaufgaben so groß, dass ein beachtlicher Grad an Parallelität erreicht werden kann, ohne dass der Verwaltungsaufwand in problematische Größenordnungen kommt.

Dieser Grad an Parallelität ist jedoch nötig, um den Durchsatz so weit zu erhöhen, dass Geschwindigkeitsverluste der Logikeinheiten ausgeglichen werden können, welche auftreten, wenn sowohl Logikbausteine als auch Speicherbausteine auf demselben Chip integriert werden. Allgemein besteht die Bestrebung, Logikbausteine und Speicherbausteine auf getrennten Chips anzuordnen, da sich die Technologien für diese beiden Bauelemente unterscheiden. Anders ausgedrückt erlaubt eine Speicher-Technologie, mit der Logikbausteine hergestellt werden, keine so schnellen Logikbausteine, als wenn die Logikbausteine mit einer speziell für Logikbausteine angepassten Technologie hergestellt werden. Daher sind bei dem in Fig. 7 gezeigten Beispiel der einfachen Parallelschaltung verschiedener Coprozessoren immer Speicher und Rechenwerke auf getrennten Bausteinen implementiert.

Für eine hohe Sicherheit ist es jedoch gerade wichtig, dass ein Angreifer nicht die Kommunikation zwischen einem Rechenwerk und einem Register abhören kann.

Bevorzugte Ausführungsbeispiele der vorliegenden Erfindung werden nachfolgend bezugnehmend auf die beiliegenden Zeichnungen detailliert erläutert. Es zeigen:
- Fig. 1: einen erfindungsgemäßen Kryptoprozessor, der auf einem einzigen Chip integriert ist;
- Fig. 2: eine detailliertere Darstellung des Coprozessors, welcher verschiedene Teilrechenwerke mit unterschiedlich langen Registern aufweist;
- Fig. 3: eine detailliertere Darstellung einer Arithmetikeinheit, welche für eine Drei-Operanden-Addition geeignet ist;
- Fig. 4a: ein schematisches Flussdiagramm zum Durchführen einer modularen Multiplikation auf seriell/parallele Art und Weise;
- Fig. 4b: ein Zahlenbeispiel zur Veranschaulichung der seriell/parallelen Arbeitsweise einer Arithmetikeinheit am Beispiel einer Multiplikation;
- Fig. 5: ein Beispiel zum Aufteilen einer modularen Exponentation in eine Anzahl von modularen Multiplikationen;
- Fig. 6: ein weiteres Beispiel zum Aufteilen einer modularen Multiplikation auf verschiedene Teilrechenwerke; und
- Fig. 7: eine Computerplatine mit einer Vielzahl von getrennt versorgten Bauelementen.

Bevor detaillierter auf die einzelnen Figuren eingegangen wird, wird im nachfolgenden ausgeführt, weshalb durch Parallelschaltung mehrerer Teilrechenwerke, die auf einem Chip angeordnet sind und durch eine Steuereinheit, die auf demselben Chip angeordnet ist, gesteuert werden, eine höhere Sicherheit erreicht wird.

Kryptoprozessoren werden für sicherheitskritische Anwendung benutzt, beispielsweise für digitale Signaturen, Authentifikationen oder Verschlüsselungsaufgaben. Ein Angreifer möchte beispielsweise den geheimen Schlüssel herausfinden, um dadurch das Kryptographieverfahren zu brechen. Kryptographie-prozessoren werden beispielsweise in Chipkarten eingesetzt, welche, wie es bereits ausgeführt worden ist, Smart Cards oder Signaturkarten für eine rechtsverbindliche elektronische Unterschrift oder auch für Homebanking oder zum Bezahlen mit dem Mobiltelephon usw. umfassen. Alternativ werden solche Kryptoprozessoren auch in Computern und Servern als Sicherheits-IC eingesetzt, um eine Authentifikation durchzuführen, oder um Verschlüsselungsaufgaben wahrnehmen zu können, welche beispielsweise im sicheren Bezahlen über das Internet, in sogenannten SSL-Sessions (SSL = Secure Socket Layer), d. h. der sicheren Übermittlung von Kreditkartennummern, bestehen können.

Typische physikalische Angriffe messen den Stromverbrauch (SPA, DPA, Timing-Attacken) oder die elektromagnetische Abstrahlung. Bezüglich einer näheren Erläuterung der Angriffe sei auf die eingangs erwähnten Literaturstellen verwiesen.

Da die Angreifer bei der heutigen Halbleitertechnologie, welche Strukturen im Bereich von typischerweise kleiner oder gleich 250 Nanometern erreicht, nur sehr schwer lokale Strommessungen durchführen können, wird bei einem Angriff typischerweise der Stromverbrauch der gesamten Chipkarte einschließlich CPU und Coprozessor gemessen, welcher sich aus der Summe der einzelnen Stromverbräuche von beispielsweise der CPU, dem RAM, einem ROM, einem E²PROM, einem Flash-Memory, einer Zeitsteuereinheit, einem Zufallszahlengenerator (RNG), einem DES-Modul und dem Kryptocoprozessor zusammensetzt.

Da der Kryptocoprozessor typischerweise den größten Stromverbrauch hat, kann ein Angreifer sehen, wann der Kryptocoprozessor zu rechnen beginnt. Um dies zu vermeiden, wäre ein über der Zeit vollständig konstanter Stromverbrauch das Ziel, ein Angreifer würde dann nicht mehr erkennen, wann der Kryptocoprozessor zu rechnen beginnt. Dieses ideale Ziel kann nicht erreicht werden, es wird jedoch durch das erfindungsgemäße Parallelschalten von Teilrechenwerken ein möglichst gleichförmiges "Rauschen" um einen Mittelwert angestrebt.

Der Stromverbrauch eines beispielsweise in CMOS-Technologie gefertigten Chips ändert sich bei einer Umschaltung von einer "0" auf eine "1". Daher ist der Stromverbrauch datenabhängig sowie abhängig von den verwendeten Befehlen der CPU und des Kryptocoprozessors.

Schaltet man nun mehrere Teilrechenwerke parallel und lässt sie mehrere Operationen bzw. Teiloperationen parallel abarbeiten, oder wird eine Operation auf mehrere Teilrechenwerke aufgeteilt, so überlagern sich, wie es ausgeführt worden ist, die Stromprofile, welche durch die Daten- und Befehlsverarbeitung entstehen.

Je mehr Teilrechenwerke parallel arbeiten, desto schwieriger kann auf Daten und Befehle in den einzelnen Teilrechenwerken bzw. in der Steuereinheit zurückgeschlossen werden, da die Daten und Befehle in jedem Teilrechenwerk üblicherweise unterschiedlich sein werden, der Angreifer jedoch nur die Überlagerung unterschiedlicher Befehle sieht.

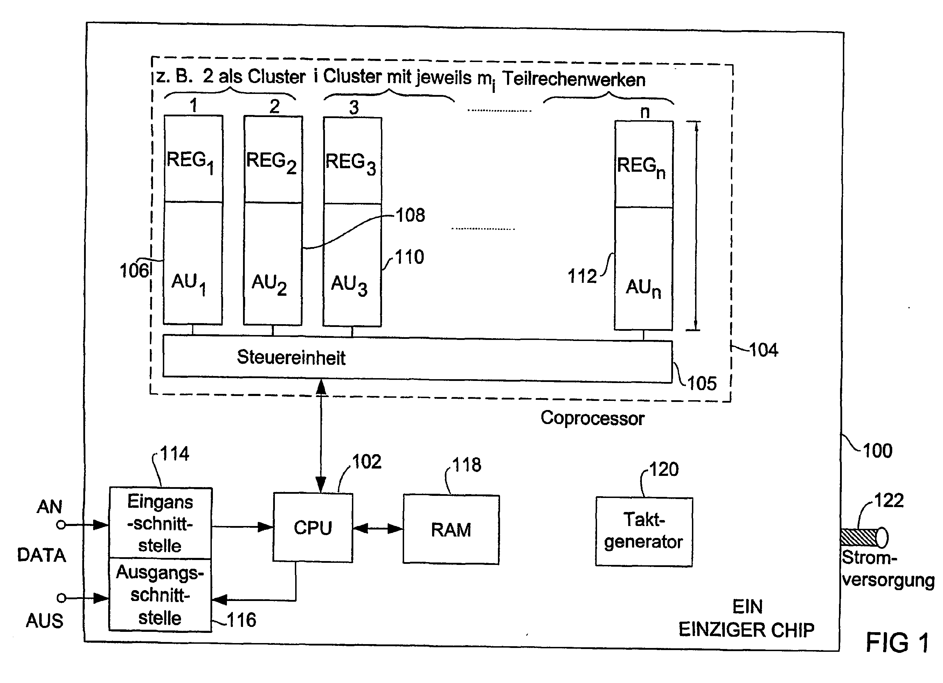

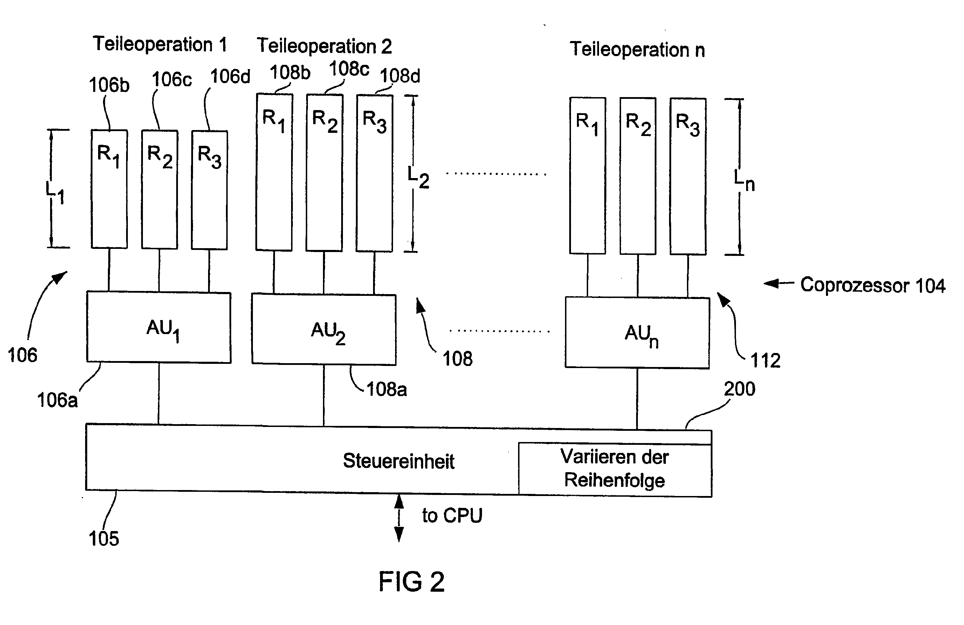

Fig. 1 zeigt einen erfindungsgemäßen Kryptoprozessor zum Durchführen von Operationen für kryptographische Anwendungen. Der Kryptoprozessor ist auf einem einzigen Chip 100 implementiert und umfasst eine zentrale Verarbeitungseinheit (CPU) 102 und einen Coprozessor 104. Der Coprozessor 104 ist, wie es in Fig. 1 gezeigt ist, auf demselben Chip angeordnet wie die zentrale Verarbeitungseinheit 102. Der Coprozessor umfasst eine Mehrzahl von Teilrechenwerken 106, 108, 110 und 112, wobei jedes Teilrechenwerk 106 bis 112 eine eigene arithmetische Einheit AU aufweist. Vorzugsweise umfasst jedes Teilrechenwerk 106 bis 112 neben der AU auch zumindest ein Register (REG), um, wie es bezugnehmend auf Fig. 2 ausgeführt wird, Zwischenergebnisse speichern zu können.

Ein typischer Kryptoprozessor wird eine Eingangsschnittstelle 114 und eine Ausgangsschnittstelle 116 umfassen, welche mit äußeren Anschlüssen für eine Dateneingabe bzw. eine Datenausgabe sowie mit der CPU 102 verbunden sind. Typischerweise ist der CPU 102 ein eigener Speicher 118 zugeordnet, der in Fig. 1 mit RAM bezeichnet ist. Unter anderem kann der Kryptoprozessor noch einen Taktgenerator 120, weitere Speicher, Zufallszahlengeneratoren etc. umfassen, welche in Fig. 1 nicht gezeigt sind.

Es sei darauf hingewiesen, dass sämtliche in Fig. 1 dargestellten Elemente auf einem einzigen Chip implementiert sind, welcher durch einen einzigen Stromversorgungsanschluss 122 mit Leistung versorgt wird. Der Chip 100 umfasst intern Stromversorgungsleitungen zu sämtlichen in Fig. 1 gezeigten Elementen, welche jedoch aus oben angegebenen Gründen nicht einzeln abgehört werden können. Dagegen stellt es ein Leichtes dar, den Stromversorgungsanschluss 122 abzuhören. Im Gegensatz zu der in Fig. 7 gezeigten Platine, bei der die Stromversorgungsanschlüsse jeder einzelnen Komponente sehr leicht abhörbar sind, und daher sehr "ausdrucksstarke" Stromprofile haben, ist das am Stromversorgungsanschluss 122 anliegende Stromprofil nahezu konstant bzw. weist ein möglichst homogenes Rauschen um einen konstanten Wert auf. Dies ist darauf zurückzuführen, dass der Coprozessor 104, welcher am meisten zum Stromverbrauch beiträgt, eine Mehrzahl von parallel angeordneten Teilrechenwerken aufweist, die unabhängig voneinander beispielsweise von "0" auf "1" umschalten und daher unkorreliert voneinander Strom verbrauchen.

Die Parallelschaltung der einzelnen Teilrechenwerke führt zudem dazu, dass der Durchsatz des Kryptonprozessors erhöht werden kann, so dass im Falle der Ausführung eines Speichers auf dem Chip die damit einhergehenden Geschwindigkeitseinbußen, welche aufgrund unterschiedlicher Technologien für Speicher und Rechenwerke auftreten, mehr als ausgeglichen werden können.

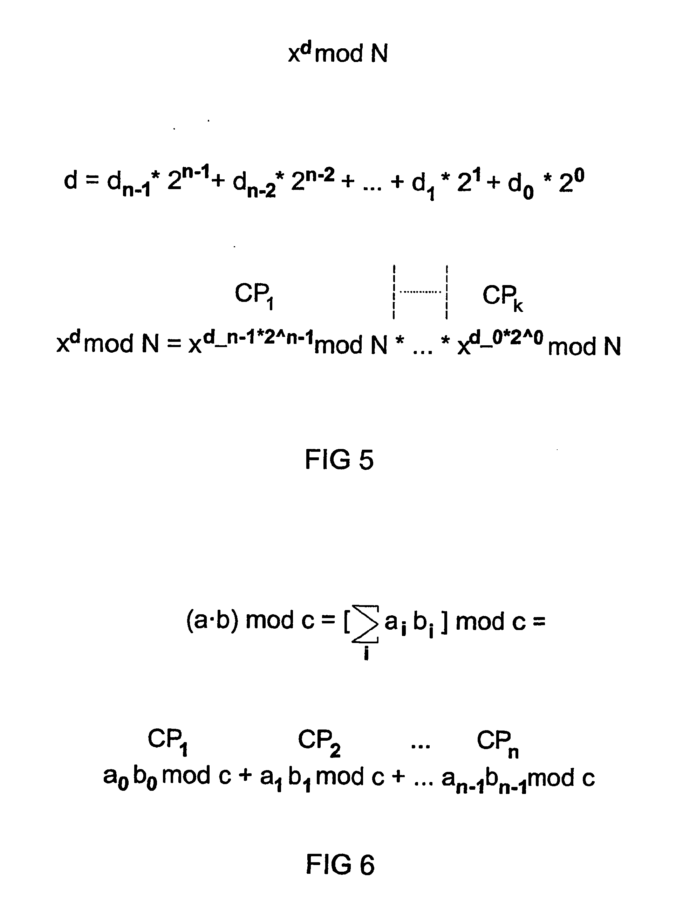

Gemäß einem bevorzugten Ausführungsbeispiel der vorliegenden Erfindung können zwei oder mehr Teilrechenwerke als sogenannte Cluster zusammengefasst werden, derart, dass z. B. ein erster Cluster Teiloperationen einer ersten Operation durchführt, während ein zweiter Cluster Teiloperationen einer zweiten kryptographischen Operation durchführt. So könnte beispielsweise der erste Cluster, der aus den Teilrechenwerken 106 und 108 besteht, z. B. zwei modulare Exponentiationen mit jeweils der halben Länge durchführen, welche aus einer einzigen modularen Exponentation mit voller Länge hergeleitet sind, während der zweite Cluster, der aus den Teilrechenwerken 110 und 112 besteht eine modulare Multiplikation durchführen könnte, wie es in Fig. 6 dargestellt ist.

Alternativ könnte ein Cluster eine RSA-Operation durchführen, während ein anderer Cluster eine DES-Operation durchführt, und wieder ein anderer Cluster beispielsweise eine Hash-Summe berechnet.

An dieser Stelle sei ausgeführt, dass die angesprochenen Kryptographiealgorithmen in der Literatur bekannt sind und daher nicht näher ausgeführt werden. Lediglich beispielhaft sei darauf hingewiesen, dass beispielsweise bei einer RSA-Verschlüsselung Operanden mit einer Länge von 2048 Bit verarbeitet werden. Bei der Entschlüsselung ist es mit Hilfe des chinesischen Restsatzes (CRT) möglich, mit halb so langen Operanden und zwei Teiloperationen zu arbeiten. Ist ein Kryptographieprozessor lediglich auf einen solchen Algorithmus ausgelegt, so beträgt die Anzahl der Teilrechenwerke 2 und die Länge der arithmetischen Einheiten würde statt 2048 für eine einzige arithmetische Einheit lediglich 1024 betragen. Die Teiloperationen gemäß dem chinesischen Restsatz werden parallel bearbeitet und dann gesteuert durch die Steuereinheit in einem der beiden Teilrechenwerke kombiniert, um das Ergebnis zu erhalten.

Fig. 2 zeigt eine detailliertere Darstellung des in Fig. 1 gezeigten Coprozessors 104. Das Teilrechenwerk 106 umfasst neben der arithmetischen Einheit 106a z. B. drei Register 106b, 106c, 106d. Das Teilrechenwerk 108 umfasst analog dazu die arithmetische Einheit 108a sowie beispielsweise ebenfalls drei Register 108b, 108c, 108d. Dasselbe trifft für das Teilrechenwerk 112 zu. Wie es in Fig. 2 gezeigt ist, kann sich die Länge der Register eines Teilrechenwerks von der Länge des Registers eines anderen Teilrechenwerks unterscheiden, so dass beispielsweise mit dem Teilrechenwerk 106 Operationen mit Zahlen einer Länge L₁ durchgeführt werden können, während mit dem Teilrechenwerk 102 Operationen mit Zahlen einer Länge L₂ durchgeführt werden können.

Die Steuereinheit 105 kann die beiden Teilrechenwerke 106 und 108 beispielsweise auch derart ansteuern, dass die arithmetischen Einheiten AU₁ und AU₂ so miteinander verkoppelt werden, dass beide Teilrechenwerke, welche dann einen Cluster bilden, arithmetische Operationen mit Zahlen einer Länge L₁ + L₂ durchführen. Die Register der beiden Teilrechenwerke können somit zusammengeschaltet werden.

Alternativ kann einem Teilrechenwerk jedoch auch eine Anzahl von Registern exklusiv zugewiesen werden, welche so groß ist, dass die Operanden für mehrere Teiloperationen, wie z. B. modulare Multiplikationen oder modulare Exponentiationen, ausreichen. Zur Vermeidung von Informationslecks können die Teiloperationen dann beispielsweise durch eine Einrichtung zum Variieren der Reihenfolge derselben, die in Fig. 2 mit 200 bezeichnet ist, überlagert oder sogar zufällig vermischt werden, um noch eine weitere Verschleierung des Stromprofils zu erreichen. Dies wird besonders dann vorteilhaft sein, wenn beispielsweise lediglich zwei Teilrechenwerke vorhanden sind bzw. lediglich zwei Teilrechenwerke arbeiten, während die anderen Teilrechenwerke eines Kryptographieprözessors gerade stillstehen.

Gemäß einem bevorzugten Ausführungsbeispiel der vorliegenden Erfindung umfasst die Steuereinheit 105 ferner eine in Fig. 2 nicht gezeigte Einrichtung zum Abschalten von Teilrechenwerken bzw. Registern von Teilrechenwerken, wenn dieselben nicht benötigt werden, was besonders für batteriebetriebene Anwendungen von Vorteil sein kann, um den Stromverbrauch der Gesamt-Schaltung zu sparen. CMOS-Bauelemente benötigen zwar nur signifikant Strom, wenn umgeschaltet wird, sie haben jedoch auch einen Ruhestromverbrauch, welcher dann ins Gewicht fallen kann, wenn die zur Verfügung stehende Leistung begrenzt ist.

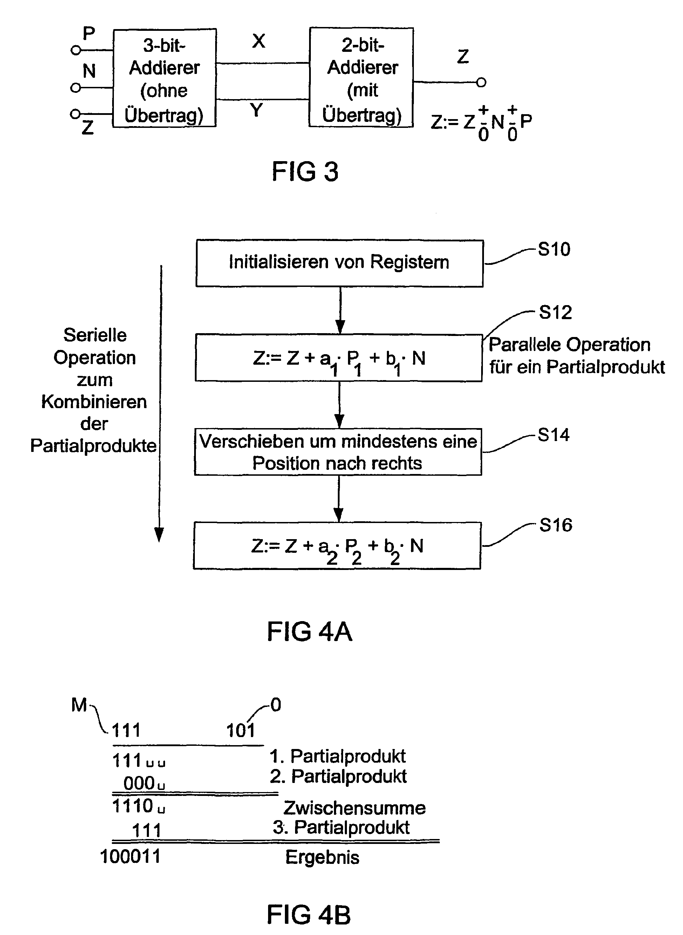

Wie es bereits ausgeführt worden ist, hat ein Kryptoprozessor aufgrund der langen Zahlen, die er verarbeiten muss, die Eigenschaft, dass bestimmte Teiloperationen, wie z. B. eine Seriell/Parallel-Multiplikation, wie sie bezugnehmend auf die Fig. 4a und 4b dargestellt wird, ziemlich viel Zeit benötigt. Bevorzugterweise sind die Teilrechenwerke derart ausgeführt, dass sie eine solche Teiloperation selbständig ohne Eingriffe der Steuereinheit 105 durchführen können, nachdem die Steuereinheit den erforderlichen Befehl an das Rechenwerk abgegeben hat. Hierzu benötigt jedes Teilrechenwerk selbstverständlich Register zum Speichern der Zwischenlösungen.

Aufgrund der Tatsache, dass ein Teilrechenwerk ohne Input der Steuereinheit 105 relativ lange arbeitet, kann die Steuereinheit 105 eine Vielzahl von einzelnen Teilrechenwerken gewissermaßen seriell, also nacheinander, mit den nötigen Befehlen versehen, derart, dass sämtliche Teilrechenwerke parallel arbeiten, jedoch gewissermaßen gestaffelt zueinander.

Zum Beispiel wird das erste Teilrechenwerk zu einem bestimmten Zeitpunkt aktiviert. Ist die Steuereinheit 105 mit der Aktivierung des ersten Teilrechenwerks fertig, so führt dieselbe unmittelbar die Aktivierung des zweiten Rechenwerks durch, während das erste Rechenwerk bereits arbeitet. Das dritte Teilrechenwerk wird dann aktiviert, wenn die Aktivierung des zweiten Teilrechenwerks vollendet ist. Dies bedeutet, dass während der Aktivierung des dritten Teilrechenwerks das erste und das zweite Teilrechenwerk bereits rechnen. Wenn dies für alle n Teilrechenwerke durchgeführt wird, so arbeiten alle Teilrechenwerke zeitlich versetzt. Wenn alle Teilrechenwerke derart arbeiten, dass ihre Teiloperationen gleich lang dauern, so wird das erste Teilrechenwerk als erstes fertig sein. Nun kann die Steuereinheit die Ergebnisse vom ersten Teilrechenwerk zur zentralen Verarbeitungseinheit übermitteln und ist mit dieser Übermittlung idealerweise fertig, bevor das zweite Teilrechenwerk fertig ist. Damit kann der Durchsatz wesentlich erhöht werden, wobei auch eine optimale Ausnutzung der Rechenkapazität der Steuereinheit 105 erreicht wird. Wenn sämtliche Teilrechenwerke identische Operationen ausführen, so entsteht dennoch ein stark verschleiertes Stromprofil, da sämtliche Teilrechenwerke zeitlich versetzt arbeiten. Anders wäre der Fall, wenn sämtliche Teilrechenwerke durch die Steuereinheit zum gleichen Zeitpunkt aktiviert werden und gewissermaßen vollständig synchron arbeiten. Dann würde ein nicht verschleiertes Stromprofil und sogar noch verstärktes Stromprofil resultieren. Daher ist das serielle Aktivieren der Teilrechenwerke auch im Hinblick auf die Sicherheit des Kryptographieprozessors vorteilhaft.

Im nachfolgenden wird auf Fig. 3 eingegangen, welche eine Vorrichtung zum Durchführen einer Drei-Operanden-Addition darstellt, wie sie rechts in Fig. 3 formelmäßig angegeben ist. In der Formel rechts in Fig. 3 ist dargestellt, dass Addition und Subtraktion gleichermaßen ausgeführt werden, da ein Operand einfach mit dem Faktor "-1" multipliziert werden muss, um zu einer Subtraktion zu kommen. Die Drei-Operanden-Addition wird mittels eines Drei-Bit-Addierers, welcher ohne Übertrag arbeitet, d. h. eines Halbaddierers, und eines nachgeschalteten Zwei-Bit-Addierers, durchgeführt, welcher mit Übertrag arbeitet, d. h. welcher ein Volladdierer ist. Alternativ kann auch der Fall auftreten, daß zum Operanden Z nur der Operand N, nur der Operand P oder gar kein Operand hinzuzuaddieren bzw. zu subtrahieren ist. Dies ist in Fig. 3 durch die "Null" unter dem Plus/Minus-Zeichen symbolisiert und wird durch die in Fig. 4a dargestellten sogenannten Look-Aheadparameter aᵢ, bᵢ symbolisiert, die in jedem Iterationsschritt erneut berechnet werden.

Fig. 3 zeigt einen sogenannten Bit-Slice eines solchen Addierwerks. Für die Addition von drei Zahlen mit beispielsweise 1024 Binärstellen würde die in Fig. 3 gezeigte Anordnung für einen vollständig parallelen Betrieb 1024 mal in der arithmetischen Einheit eines Rechenwerks 106 vorhanden sein.

Bei einem bevorzugten Ausführungsbeispiel der vorliegenden Erfindung ist jedes Teilrechenwerk 106 bis 112 (Fig. 1) angeordnet, um eine modulare Multiplikation unter Verwendung des Look-Ahead-Algorithmus auszuführen, der in der DE 36 31 992 C2 dargelegt ist.

Eine hierfür erforderliche modulare Multiplikation wird anhand von Fig. 4b erläutert. Es besteht die Aufgabe, die Binärzahlen "111" und "101" miteinander zu multiplizieren. Hierzu wird in einem Teilrechenwerk diese Multiplikation analog einer Multiplikation zweier Zahlen gemäß der bekannten "Schulmathematik" ausgeführt, jedoch mit binärer Zahlendarstellung. Aufgrund der Einfachheit der Darstellung wird nachfolgend der Fall betrachtet, in dem kein Look-Ahead-Algorithmus und keine Modulo-Reduktion eingesetzt wird. Wenn dieser Algorithmus durchgeführt wird, so ergibt sich zunächst ein erstes Partialprodukt "111". Dieses Partialprodukt wird dann, um seine Signifikanz zu berücksichtigen, um eine Stelle nach links verschoben. Zu dem ersten nach links verschobenen Partialprodukt, das als Zwischenergebnis eines ersten Iterationsschritts aufgefaßt werden kann, wird dann, in einem zweiten Iterationsschritt das zweite Partialprodukt "000" hinzuaddiert. Das Ergebnis dieser Addition wird dann wieder um eine Stelle nach links verschoben. Das verschobene Ergebnis dieser Addition ist dann das aktualisierte Zwischenergebnis. Zu diesem aktualisierten Zwischenergebnis wird dann das letzte Partialprodukt "111" hinzuaddiert. Das erhaltene Ergebnis ist dann das Endergebnis der Multiplikation. Es ist zu sehen, daß die Multiplikation in zwei Additionen und zwei Verschiebungsoperationen aufgeteilt worden ist.

Es ist ferner zu sehen, daß der Multiplikand M das Partialprodukt darstellt, wenn die betrachtete Stelle des Multiplikators eine binäre "1" ist. Das Partialprodukt ist hingegen 0, wenn die betrachtete Stelle des Multiplikators eine binäre "0" ist. Ferner werden durch die jeweiligen Verschiebungsoperationen die Stellen bzw. die Wertigkeiten der Partialprodukte berücksichtigt. In Fig. 4b ist dies durch das versetzte Auftragen der Partialprodukte dargestellt. Hardwaremäßig werden für die Addition von Fig. 4b zwei Register Z₁ und Z₂ benötigt. Das erste Partialprodukt könnte in dem Register Z₁ gespeichert werden und dann in diesem Register um ein Bit nach links geschoben werden. Das zweite Partialprodukt könnte in dem Register Z₂ gespeichert werden. Die Zwischensumme könnte dann wieder im Register Z₁ gespeichert werden und dann wieder um ein Bit nach links geschoben werden. Das dritte Partialprodukt würde wieder im Register Z₂ gespeichert werden. Das Endergebnis würde dann im Register Z₁ stehen.

Ein schematisches Flussdiagramm für das in Fig. 4b gezeigte Verfahren findet sich in Fig. 4a. Zunächst werden in einem Schritt S10 die in einem Teilrechenwerk vorhandenen Register initialisiert. In einem Schritt S12 wird anschließend, nach dem Initialisieren, eine Drei-Operanden-Addition durchgeführt, um das erste Partialprodukt zu berechnen. Es sei darauf hingewiesen, dass für das einfache in Fig. 4b gegebene Beispiel, das eine Multiplikation ohne Modulo-Operation darstellt, die in Fig. S12 bezeichnete Gleichung lediglich Z, a₁ und P₁ umfassen würde. a₁ kann als erster Look-Ahead-Parameter bezeichnet werden. In der allereinfachsten Ausführung hat a einen Wert von "1", wenn die betrachtete Stelle des Multiplikators O eine 1 ist. a ist gleich Null, wenn die betrachtete Stelle des Multiplikators eine Null ist.

Die in Block S12 dargestellte Operation wird parallel für alle beispielsweise 1024 Bit durchgeführt. Daraufhin wird in einem Schritt S14 im einfachsten Fall eine Verschiebungsoperation um eine Position nach rechts durchgeführt, um zu berücksichtigen, dass das höchstwertige Bit des 2. Partialprodukts eine Stelle niedriger angeordnet ist als das höchstwertige Bit des 1. Partialprodukts. Haben mehrere aufeinanderfolgende Bits des Multiplikators O eine Null, so findet eine Verschiebung um mehrere Positionen nach rechts statt. Schließlich wird in einem Schritt S16 wieder die parallele Drei-Operanden-Addition beispielsweise unter Verwendung der in Fig. 3 gezeigten Addiererkette, durchgeführt.

Dieses Verfahren wird fortgesetzt, bis alle beispielsweise 1024 Partialprodukte aufaddiert sind. Seriell/Parallel bedeutet also die parallele Durchführung in dem Block S12 oder S16, und das serielle Verarbeiten, um nacheinander alle Partialprodukte miteinander zu kombinieren.

Im nachfolgenden wird auf die Fig. 5 bis 7 eingegangen, um einige Beispiele dafür zu geben, wie eine Operation in bestimmte Teiloperationen aufgeteilt werden kann. Betrachtet wird in Fig. 5 die Operation x^{d} mod N. Zur Zerlegung dieser modularen Exponentiation wird der Exponent d in binärer Schreibweise dargestellt. Wie es in Fig. 5 dargestellt ist, ergibt sich dadurch eine Kette von modularen Multiplikationen, wobei, wie es ebenfalls in Fig. 5 dargestellt ist, jede modulare Einzeloperation je einem Teilrechenwerk zugeordnet werden kann, derart, dass sämtliche modularen Operationen parallel durch den in Fig. 1 gezeigten Kryptographieprozessor ausgeführt werden. Die dann erhaltenen Zwischenergebnisse werden, nachdem sie parallel ermittelt worden sind, aufmultipliziert, um das Ergebnis zu erhalten. Die Steuereinheit 105 steuert dabei die Aufteilung auf die einzelnen Teilrechenwerke TRW₁ bis TRWₖ und dann das abschließende Aufmultiplizieren der einzelnen Zwischenergebnisse.

In Fig. 6 ist ein weiteres Beispiel für eine Aufteilung einer Operation (a*b) mod c in mehrere modulare Operationen gezeigt. Wieder kann das Teilrechenwerk TRW₁ ein erstes Zwischenergebnis ermitteln. Die Teilrechenwerke TRW₂ bis TRWₙ berechnen ebenfalls Zwischenergebnisse, woraufhin, nach Erhalten der Zwischenergebnisse, die Steuereinheit 105 die Aufmultiplikation der Zwischenergebnisse steuert. Die Steuereinheit steuert die Aufsummation z. B. so, daß sie ein Teilrechenwerk auswählt, das dann die Zwischenergebnisse zur Aufsummation erhält. Auch hier wird also eine Operation in mehrere voneinander unabhängige Teiloperationen aufgeteilt.

Es sei darauf hingewiesen, dass viele Möglichkeiten bestehen, um die eine oder andere Operation in Teiloperationen aufzuteilen. Die in Fig. 5 und 6 gegebenen Beispiele dienen lediglich zur Veranschaulichung der Möglichkeiten zur Aufteilung einer Operation in eine Mehrzahl von Teiloperationen, wobei durchaus günstigere Aufteilungen hinsichtlich der erreichbaren Performance existieren können. Wesentlich an den Beispielen ist somit nicht die Performance des Prozessors, sondern daß Aufteilungen existieren, so dass jedes Teilrechenwerk eine unabhängige Teiloperation durchführt, und dass eine Mehrzahl von Teiloperationen von einer Steuereinheit gesteuert wird, um ein möglichst verschleiertes Stromprofil am Stromeingang in den Chip zu erhalten.

**Bezugszeichenliste**

| | |
|---|---|
| 100 | Chip |
| 102 | CPU |
| 104 | Coprozessor |
| 105 | Steuereinheit |
| 106 | Teilrechenwerk 1 |
| 108 | Teilrechenwerk 2 |
| 110 | Teilrechenwerk 3 |
| 112 | Teilrechenwerk n |
| 114 | Eingangsschnittstelle |
| 116 | Ausgangsschnittstelle |
| 118 | RAM |
| 120 | Taktgenerator |
| 122 | Stromversorgungsanschluß |
| 106a | arithmetische Einheit 1 |
| 106b | Register 1 |
| 106c | Register 2 |
| 106d | Register 3 |
| 108a | arithmethische Einheit 2 |
| 108b | Register 1 |
| 108c | Register 2 |
| 108d | Register 3 |
| 200 | Einrichtung zum Variieren der Reihenfolge |
| 800 | Computerplatine |
| 802 | CPU |
| 804 | RAM |
| 806 | erster Coprozessor |
| 808 | zweiter Coprozessor |
| 810 | dritter Coprozessor |
| 812 | Bus |
| 814 | Speicher 1 |
| 816 | Speicher 2 |
| 818 | Speicher 3 |
| I₁ - I₈ | Stromversorgungsanschlüsse |

## Patentansprüche

1. Kryptographieprozessor zum Durchführen von Operationen für kryptographische Anwendungen, mit folgenden Merkmalen:
einer zentralen Verarbeitungseinheit (102) zum Erhalten von Befehlen für das Ausführen einer Operation und zum Ausgeben von Ergebnissen einer Operation;
einem Coprozessor (104), der mit der zentralen Verarbeitungseinheit (102) gekoppelt ist, wobei der Coprozessor folgende Merkmale aufweist:
eine Mehrzahl von Teilrechenwerken (106, 108, 110, 112), wobei jedes Teilrechenwerk zumindest eine arithmetische Einheit (AU₁, AU₂, AU₃, AUₙ) aufweist, wobei jedes Teilrechenwerk ferner eine Mehrzahl von Registern (106b, 106c, 106d, 108b, 108c, 108d) aufweist, die der arithmetischen Einheit (106a, 108a) des jeweiligen Teilrechenwerks exklusiv zugewiesen sind, und wobei jedes Teilrechenwerk eine Wortlänge hat, die durch die Zahlenbreite der arithmetischen Einheit vorgegeben ist; und
eine einzige Steuereinheit (105), die mit jedem der Mehrzahl von Teilrechenwerken gekoppelt ist, und die angeordnet ist, um eine Operation in Teiloperationen aufzuteilen, die Teiloperationen auf die Mehrzahl von Teilrechenwerken zu verteilen, und um die Ausführung der Operation durch die Mehrzahl von Teilrechenwerken zu steuern, so dass die Teiloperationen in den Teilrechenwerken parallel ausgeführt werden, wobei die Steuereinheit (105) ferner ausgebildet ist, um zumindest zwei Teilrechenwerke so zusammenzuschalten, dass die zusammengeschalteten Teilrechenwerke eine Berechnung mit Zahlen durchführen können, deren Wortlänge gleich der Summe der Zahlenbreiten der zusammengeschalteten Teilrechenwerke ist, wobei ferner, gesteuert durch die Steuereinheit (105), Ergebnisse der Teiloperationen in einem Teilrechenwerk kombiniert werden, um ein Ergebnis der Operation zu erhalten,
wobei die Mehrzahl von Teilrechenwerken (106, 108, 110, 112), die zentrale Verarbeitungseinheit (102) und die Steuereinheit (105) auf einem einzigen Chip (100) integriert sind, und
wobei der Chip (100) einen gemeinsamen Versorgungsstromzugang (122) zum Versorgen der Mehrzahl von Teilrechenwerken, der zentralen Verarbeitungseinheit (102) und der Steuereinheit mit Strom aufweist.

2. Kryptographieprozessor nach Patentanspruch 1, bei dem die Operationen für kryptographische Anwendungen eine modulare Exponentiation und/oder eine modulare Multiplikation umfassen.

3. Kryptographieprozessor nach Anspruch 1 oder 2, bei dem jedes Teilrechenwerk angeordnet ist, um binäre Zahlen mit zumindest 512 Stellen und bevorzugterweise zumindest 1024 oder 2048 Stellen zu verarbeiten.

4. Kryptographieprozessor nach einem der vorhergehenden Ansprüche, der ferner einen nur der zentralen Verarbeitungseinrichtung (102) zugeordneten Speicher (118) aufweist.

5. Kryptographieprozessor nach einem der vorhergehenden Ansprüche, der ferner folgendes Merkmal aufweist:
eine Takterzeugungseinrichtung (120) zum Liefern eines Taktes zu der Verarbeitungseinrichtung (102), der Mehrzahl von Teilrechenwerken und der Steuereinheit (105), wobei die Takterzeugungseinrichtung ebenfalls auf dem einzigen Chip integriert ist.

6. Prozessor nach Anspruch 1,
bei dem sich die Länge (L₁, L₂) der Mehrzahl von Registern, die einem Teilrechenwerk zugewiesen sind, und der Länge der Mehrzahl von Registern, die einem anderen Teilrechenwerk zugeordnet sind, unterscheiden, derart, dass die Teilrechenwerke arithmetische Berechnung mit jeweils unterschiedlichen langen Zahlen durchführen können.

7. Kryptographieprozessor nach Anspruch 1 oder Anspruch 7, bei dem die Anzahl der Register, die einem Teilrechenwerk zugeordnet ist, ausreichend ist, um Operanden für zumindest zwei Teiloperationen zu halten, so dass für zumindest zwei Teiloperationen keine Übertragung von Operanden zwischen dem Coprozessor (104) und der zentralen Verarbeitungseinrichtung (102) erforderlich ist.

8. Kryptographieprozessor nach Anspruch 7, bei dem die Steuereinheit (105) ferner folgendes Merkmal aufweist:
eine Einrichtung (200) zum zeitlichen Steuern des Betriebs der Teilrechenwerke, derart, dass die Reihenfolge der zumindest zwei Teiloperationen, deren Operationen in den Registern eines Teilrechenwerkes gespeichert werden, einstellbar ist.

9. Kryptographieprozessor nach einem der Ansprüche 1 bis 8, der ferner folgendes Merkmal aufweist:
eine Einrichtung zum Abschalten von einem Teilrechenwerk, falls von der Steuereinrichtung bestimmt wird, dass für das eine Teilrechenwerk keine Teiloperationen vorhanden sind, um den Stromverbrauch des Prozessors zu verringern.

10. Kryptographieprozessor nach einem der vorhergehenden Ansprüche, bei dem die Steuereinrichtung (105) angeordnet ist, um zumindest zwei Teilrechenwerke zu einem Cluster zu verbinden, derart, dass eine Teiloperation dem Cluster zugewiesen wird, so dass diese Teiloperation durch die Teilrechenwerke des Clusters zusammen ausführbar ist.

11. Kryptographieprozessor nach einem der vorhergehenden Ansprüche, bei dem die arithmetische Einheit zumindest eines Teilrechenwerks ein Seriell/Parallel-Rechenwerk aufweist, das so ausgestaltet ist, dass in einem Zyklus eine Anzahl von Rechnungen parallel ausführbar ist, wobei die Anzahl gleich den Stellen einer in der Rechnung verwendeten Zahl ist, und in einem anderen späteren Zyklus auf serielle Art und Weise unter Verwendung des Ergebnisses des einen Zyklus dieselbe Rechnung wie im ersten Zyklus durchgeführt wird.

12. Kryptographieprozessor nach Patentanspruch 11, bei dem ein Teilrechenwerk für eine modulare Multiplikation ausführt ist, um in dem einen Zyklus ein Partialprodukt zu einem Ergebnis eines vorherigen Zyklus hinzu zu addieren, und in einem weiteren Zyklus das Ergebnis des letzten Zyklus zu einem nächsten Partialprodukt hinzu zu addieren.

13. Kryptographieprozessor nach Patentanspruch 12, bei dem die arithmetische Einheit einen Drei-Operanden-Addierer für
eine modulare Multiplikation aufweist, welcher für jede Stelle einer verarbeiteten Zahl folgende Merkmale aufweist:
einen Halbaddierer für eine Addition ohne Übertrag mit drei Eingängen und zwei Ausgängen; und
einen nachgeschalteten Volladdierer mit zwei Eingängen und einem Ausgang.
, so dass die Teiloperationen in den Teilrechenwerken parallel ausgeführt werden
wobei ferner, gesteuert durch die Steuereinheit (105), Ergebnisse der Teiloperationen in einem Teilrechenwerk kombiniert werden, um ein Ergebnis der Operation zu erhalten,

## Claims

1. Cryptographic processor for carrying out operations for cryptographic applications, having the following features:
a central processing unit (102) for receiving instructions for executing an operation and for outputting results of an operation;
a coprocessor (104) which is coupled to the central processing unit (102), the coprocessor having the following features:
a plurality of arithmetic subunits (106, 108, 110, 112), each arithmetic subunit having at least one arithmetic unit (AU₁, AU₂, AU₃, AUₙ), each arithmetic subunit also having a plurality of registers (106b, 106c, 106d, 108b, 108c, 108d) which are exclusively allocated to the arithmetic unit (106a, 108a) of the respective arithmetic subunit, and each arithmetic subunit having a word length which is predefined by the number width of the arithmetic unit; and
a single control unit (105) which is coupled to each of the plurality of arithmetic subunits and is organized to divide an operation into suboperations, to distribute the suboperations to the plurality of arithmetic subunits and to control the execution of the operation by the plurality of arithmetic subunits, with the result that the suboperations are executed in a parallel manner in the arithmetic subunits, the control unit (105) also being designed to interconnect at least two arithmetic subunits in such a manner that the interconnected arithmetic subunits can carry out a calculation with numbers whose word length is equal to the sum of the number widths of the interconnected arithmetic subunits, results of the suboperations also being combined in an arithmetic subunit, under the control of the control unit (105), in order to obtain a result of the operation,
the plurality of arithmetic subunits (106, 108, 110, 112), the central processing unit (102) and the control unit (105) being integrated on a single chip (100), and
the chip (100) having a common supply current entry (122) for supplying the plurality of arithmetic subunits, the central processing unit (102) and the control unit with current.

2. Cryptographic processor according to Patent Claim 1, in which the operations for cryptographic applications comprise a modular exponentiation and/or a modular multiplication.

3. Cryptographic processor according to Claim 1 or 2, in which each arithmetic subunit is organized to process binary numbers having at least 512 digits and preferably at least 1024 or 2048 digits.

4. Cryptographic processor according to one of the preceding claims, which also has a memory (118) associated only with the central processing device (102).

5. Cryptographic processor according to one of the preceding claims, which also has the following feature:
a clock generation device (120) for providing the processing device (102), the plurality of arithmetic subunits and the control unit (105) with a clock, the clock generation device likewise being integrated on the single chip.

6. Processor according to Claim 1,
in which the length (L₁, L₂) of the plurality of registers allocated to an arithmetic subunit and the length of the plurality of registers associated with another arithmetic subunit differ in such a manner that the arithmetic subunits can carry out arithmetic calculation with numbers of different lengths in each case.

7. Cryptographic processor according to Claim 1 or Claim 7, in which the number of registers associated with an arithmetic subunit is sufficient to retain operands for at least two suboperations, with the result that it is not necessary to transmit operands between the coprocessor (104) and the central processing device (102) for at least two suboperations.

8. Cryptographic processor according to Claim 7, in which the control unit (105) also has the following feature:
a device (200) for temporally controlling the operation of the arithmetic subunits in such a manner that it is possible to set the order of the at least two suboperations, the operations of which are stored in the registers of an arithmetic subunit.

9. Cryptographic processor according to one of Claims 1 to 8, which also has the following feature:
a device for switching off an arithmetic subunit if the control device determines that there are no suboperations for reducing the power consumption of the processor for the one arithmetic subunit.

10. Cryptographic processor according to one of the preceding claims, in which the control device (105) is organized to connect at least two arithmetic subunits to form a cluster in such a manner that a suboperation is allocated to the cluster, with the result that this suboperation can be executed by the arithmetic subunits in the cluster together.

11. Cryptographic processor according to one of the preceding claims, in which the arithmetic unit of at least one arithmetic subunit has a serial/parallel arithmetic unit which is configured in such a manner that a number of calculations can be carried out in a parallel manner in one cycle, the number being equal to the digits of a number used in the calculation, and the same calculation as in the first cycle is carried out in another, subsequent cycle in a serial manner using the result of the one cycle.

12. Cryptographic processor according to Patent Claim 11, in which an arithmetic subunit for a modular multiplication is designed to add, in the one cycle, a partial product to a result of a previous cycle and, in a further cycle, to add the result of the last cycle to a next partial product.

13. Cryptographic processor according to Patent Claim 12, in which the arithmetic unit has a three-operand adder for a modular multiplication, which adder has the following features for each digit of a processed number:
a half-adder for addition without a carry having three inputs and two outputs, and
a downstream full adder having two inputs and one output.

## Revendications

1. Processeur de cryptographie pour effectuer des opérations pour des applications cryptographiques, ayant les caractéristiques suivantes :
une unité (102) centrale de traitement pour recevoir des instructions pour l'exécution d'une opération et pour la sortie de résultats d'une opération,
un coprocesseur (104), qui est adjoint à l'unité (102) centrale de traitement, le coprocesseur ayant les caractéristiques suivantes :
une multiplicité de sous-organes de calcul (106, 108, 110, 112), chaque sous-organe de calcul ayant au moins une unité (Au1, AU2, AU3, AUn) arithmétique, chaque sous-organe de calcul ayant, en outre, une multiplicité de registres (106b, 106c, 106d, 108b, 108c, 108d) qui sont affectés, exclusivement, à l'unité (106a, 108a) arithmétique du sous-organe de calcul respectif et chaque sous-organe de calcul a une longueur de mot qui est prescrite par la largeur numérique de l'unité arithmétique ; et
une unité (105) de commande unique, qui est adjointe à chacun de la multiplicité de sous-organes de calcul et qui est disposée de manière à subdiviser une opération en des sous-opérations, à répartir les sous-opérations sur la multiplicité de sous-organes de calcul et à commander l'exécution de l'opération par la multiplicité de sous-organes de calcul, de manière à ce que les sous-opérations soient exécutées en parallèle dans les sous-organes de calcul, l'unité (105) de commande étant constituée, en outre, pour interconnecter au moins deux sous-organes de calcul de manière à ce que les sous-organes de calcul interconnectés puissent exécuter un calcul avec des nombres dont la longueur de mot est égale à la somme des largeurs numériques des sous-organes de calcul interconnectés, dans lequel, en outre, sous la commande de l'unité (105) de commande, des résultats des sous-opérations sont combinés dans un sous-organe de calcul pour obtenir un résultat de l'opération,
dans lequel la multiplicité de sous-organes de calcul (106, 108, 110, 112), l'unité centrale de traitement et l'unité (105) de commande sont intégrées sur une puce (100) unique et dans lequel la puce (100) a une entrée (122) commune de courant d'alimentation pour l'alimentation en courant de la multiplicité de sous-organes de calcul, de l'unité (102) centrale de traitement et de l'unité de commande.

2. Processeur de cryptographie suivant la revendication 1, dans lequel les opérations, pour des applications cryptographiques, comprennent une exponentiation modulaire et/ou une multiplication modulaire.

3. Processeur de cryptographie suivant l'une des revendications 1 ou 2,
dans lequel chaque sous-organes de calcul est disposé de manière à traiter des nombres binaires ayant au moins 512 positions, et de préférence au moins 1024 ou 2048 positions.

4. Processeur de cryptographie suivant l'une des revendications précédentes,
qui a, en outre, une mémoire (118) associée seulement au dispositif (102) central traitement.

5. Processeur de cryptographie suivant l'une des revendications précédentes,
qui a, en outre, la caractéristique suivante :
un dispositif (120) de production de cadence pour la fourniture d'une cadence au dispositif (102) de traitement à la multiplicité de sous-organes de calcul et à l'unité (105) de commande, le dispositif de production de cadence étant intégré également sur la puce unique.

6. Processeur de cryptographie suivant la revendication 1, dans lequel la longueur (L1, L2) de la multiplicité de registres, qui sont affectés à un sous-organe de calcul, et la longueur de la multiplicité de registres, qui sont affectés à un autre sous-organe de calcul, sont différentes de manière à ce que les sous-organes de calcul puissent effectuer un calcul arithmétique ayant des nombres respectivement de longueur différentes.

7. Processeur de cryptographie suivant la revendication 1 ou la revendication 7,
dans lequel le nombre des registres, qui sont affectés à un sous-organe de calcul, est suffisant pour conserver des opérandes pour au moins deux sous-opérations de manière à ce que, pour au moins deux sous-opérations, une transmission d'opérandes entre le coprocesseur (104) et l'unité (102) centrale ne soit pas nécessaire.

8. Processeur de cryptographie suivant la revendication 7, dans lequel l'unité (105) de commande a, en outre, la caractéristique suivante :
un dispositif (200) de commande temporelle du fonctionnement des sous-organes de calcul de manière à pouvoir régler la succession des au moins deux sous-opérations dont les opérations sont mémorisées dans les registres d'un sous-organe de calcul.

9. Processeur de cryptographie suivant l'une des revendications 1 à 8,
qui a, en outre, la caractéristique suivant :
un dispositif d'arrêt d'un sous-organe de calcul s'il est déterminé, par le dispositif de commande, que, pour ce sous-organe de calcul, il n'y a pas de sous-opérations afin de diminuer la consommation de courant du processeur.

10. Processeur de cryptographie suivant l'une des revendications précédentes,
dans lequel l'unité (105) de commande est disposée pour relier au moins deux sous-organes de calcul en un groupement de manière à affecter une sous-opération au groupement de sorte que cette sous-opération peut être effectuée ensemble par les sous-organes de calcul du groupement.

11. Processeur de cryptographie suivant l'une des revendications précédentes,
dans lequel l'unité arithmétique d'au moins un sous-organe de calcul a un organe de calcul série/parallèle qui est tel que, dans un cycle, un nombre de calculs peut être exécuté en parallèle, le nombre étant égal aux positions d'un nombre utilisé dans le calcul et dans un autre cycle ultérieur, d'une manière en série en utilisant le résultat du un cycle, ce même calcul est effectué comme dans le premier cycle.

12. Processeur de cryptographie suivant la revendication 11, dans lequel un sous-organe de calcul pour une multiplication modulaire est mis en oeuvre pour ajouter dans le un cycle un produit partiel à un résultat d'un cycle précédent et dans un autre cycle ajouter le résultat du dernier cycle à un produit partiel venant immédiatement ensuite.

13. Processeur de cryptographie suivant la revendication 12, dans lequel l'unité arithmétique a un additionneur à trois opérandes pour une multiplication modulaire, additionneur qui a, pour chaque position d'un nombre traité, les caractéristiques suivantes :
un demi-additionneur pour une addition sans report ayant trois entrées et deux sorties ; et
un additionneur complet en aval ayant deux entrées et une sortie.
